# EUROPÄISCHE PATENTANMELDUNG

(11) **EP 1 291 758 A2**
(43) Veröffentlichungstag der Anmeldung: **12.03.2003**
(21) Anmeldenummer: 02019167.2
(22) Anmeldetag: 02.09.2002
(51) Int. Cl.: G06F 3/12

(54) **Verfahren zur Kommunikation mit einem Drucksystem mittels eines regelbasierten Protokolls**

(30) Priorität: 05.09.2001 US 317672 P
(71) Anmelder: Heidelberger Druckmaschinen Aktiengesellschaft, 69115 Heidelberg (DE)
(72) Erfinder: Maier, Steve, Farmington, NY (US); Wu, Michael, Spencerport, NY 14559 (US)
(74) Vertreter: Franzen, Peter

(57) **Zusammenfassung**

Ein Verfahren zur Kommunikation mit einem Drucksystem (26) über ein Kommunikationsnetzwerk (10) mittels eines regelbasierten Protokolls sieht vor, dass an einem Fernverarbeitungssystem (20) eine Abfragenachricht gemäß dem regelbasierten Protokoll erzeugt wird. Die Abfragenachricht enthält einen Operatornamen. Das Fernverarbeitungssystem (20) überträgt die protokollgemäße Abfragenachricht vom Fernverarbeitungssystem (20) über das Kommunikationsnetzwerk (10) an das Drucksystem (26). Das Fernverarbeitungssystem (26) ermittelt, ob es vom Drucksystem (26) eine Antwortnachricht gemäß dem regelbasierten Protokoll erhält. Wenn das Fernverarbeitungssystem (20) von dem Drucksystem (26) die protokollgemäße Antwortnachricht erhält, liest das Fernverarbeitungssystem (20) einen dem Operatornamen zugeordneten, in der protokollgemäßen Antwortnachricht enthaltenen Attributsnamen.

## Beschreibung

Die vorliegende Erfindung betrifft den Digitaldruck. Insbesondere betrifft die Erfindung ein Verfahren zur Kommunikation mit einem Drucksystem mittels eines regelbasierten Protokolls.

Ein digitales Drucksystem kann eine Fernbedienung des digitalen Drucksystems über ein Fernverarbeitungssystem ermöglichen. Die Durchführung eines Druckauftrags am Drucksystem oder die Konfiguration des Drucksystems über Fernbedienung erfordert, dass das Fernbedienungssystem mit dem Drucksystem kommuniziert. In der Regel wird eine Druckertreibersoftware in einen Speicher des Fernverarbeitungssystems geladen, um eine Kommunikation mit dem Drucksystem zu ermöglichen.

Ein Druckertreiber liefert dem Fernverarbeitungssystem Informationen über das Drucksystem, z.B. über den Auftragsstatus, die verfügbaren Weiterverarbeitungsgeräte, eine Liste des verfügbaren Papiers und die Auftragskapazität des Drucksystems. Wenn das Fernverarbeitungssystem mit dem Drucksystem über ein Netzwerk kommuniziert, erfolgt der Austausch von Informationen über ein Kommunikationsprotokoll.

Ein derartiges Protokoll zur Kommunikation zwischen dem Fernverarbeitungssystem und dem Drucksystem ist z.B. das Internet Printing Protocol (IPP). Das IPP ist in dem Request for Comments (RFC) Nr. 2567 mit dem Titel "Design Goals for an Internet Printing Protocol" (Gestaltungsziele für ein Internet-Druckprotokoll) der Internet Engineering Task Force vom April 1999 beschrieben. IPP-Nachrichten können bekanntermaßen Firewalls durchdringen. Ein Firewall ist eine Sicherheitsmaßnahme zur Begrenzung der Übertragung schädlicher Kommunikationen zwischen einer Gruppe von Netzwerkgeräten in einem Local Area Network (LAN) und dem Internet. Obwohl Fernverarbeitungsvorrichtungen, die dasselbe LAN wie das Drucksystem nutzen, mit dem Drucksystem kommunizieren können, kann es sein, dass die Nachrichten eines Fernverarbeitungssystems, das versucht, mit dem Drucksystem über das Internet zu kommunizieren, von einem oder mehreren Firewalls blockiert werden.

IPP-Nachrichten durchdringen Firewalls, da IPP eine Erweiterung des Hypertext Transfer Protocol (http) darstellt. IPP-Nachrichten verfügen jedoch nur über einen festen, vordefinierten Satz von Vorgängen und Attributen, die von Netzwerkgerät zu Netzwerkgerät über das Internet kommuniziert werden können. Moderne Drucksysteme sind sehr flexibel in der Anzahl und Art der kommunizierbaren Attribute, und es kann sein, dass der Druckertreiber an dem Fernverarbeitungssystem einen flexiblen Satz von Vorgängen benötigt, die über die durch das IPP bereitgestellten Vorgänge hinaus gehen. Daher besteht Bedarf an einem Verfahren zur Kommunikation zwischen einem Fernverarbeitungssystem und einem Drucksystem mit flexiblem Vokabular für Vorgänge und Attribute.

Erfindungsgemäß umfasst ein Verfahren zur Kommunikation mit einem Drucksystem über ein Kommunikationsnetzwerk mittels eines regelbasierten Protokolls das Erzeugen einer Abfragenachricht gemäß einem regelbasierten Protokoll am Fernverarbeitungssystem. Diese Abfragenachricht enthält einen Operatornamen. Das Fernverarbeitungssystem übermittelt die Abfragenachricht gemäß einem regelbasierten Protokoll über das Kommunikationsnetzwerk vom Fernverarbeitungssystem an das Drucksystem. Das Fernverarbeitungssystem ermittelt, ob es von dem Drucksystem eine Antwortnachricht gemäß dem regelbasierten Protokoll erhält. Wenn das Fernverarbeitungssystem von dem Drucker die Antwortnachricht gemäß dem regelbasierten Protokoll erhält, liest das Fernverarbeitungssystem einen mit dem Operatornamen verknüpften Attributnamen. Die Antwortnachricht gemäß dem regelbasierten Protokoll enthält den Attributnamen.

Weitere Merkmale und vorteilhafte Ausführungsformen der vorliegenden Erfindung werden in der folgenden Beschreibung der beigefügten, nachfolgend aufgeführten Zeichnungen näher erläutert.

Es zeigen:
- Fig. 1: ein Blockdiagramm eines erfindungsgemäßen Dokumentproduktionssystems;
- Fig. 2: ein Blockdiagramm eines erfindungsgemäßen bevorzugten Protokollstapels für das Drucksystem und das Fernverarbeitungssystem;
- Fig. 3: ein Ablaufdiagramm eines bevorzugten Verfahrens zur Kommunikation mit einem Drucksystem über ein Kommunikationsnetzwerk mittels eines erfindungsgemäßen regelbasierten Protokolls.

Die hier verwendete Bezeichnung "Drucksystem" bezieht sich auf ein digitales Drucksystem, ein Vervielfältigungssystem, oder beides. Die Erfindung betrifft ein Drucksystem, das mindestens ein Eingabefach und vorzugsweise mehrere Eingabefächer sowie mindestens ein Ausgabefach aufweist. Wenn mehrere Eingabefächer vorhanden sind, kann jedes mit unterschiedlichen Medien (z.B. unterschiedlichen Papierarten oder -formaten) bestückt sein. Das Drucksystem kann zur Herstellung zusammengetragener Ausgabesätze von Bogen geeignet sein, die in einem oder mehreren der Ausgabefächer abgelegt werden.

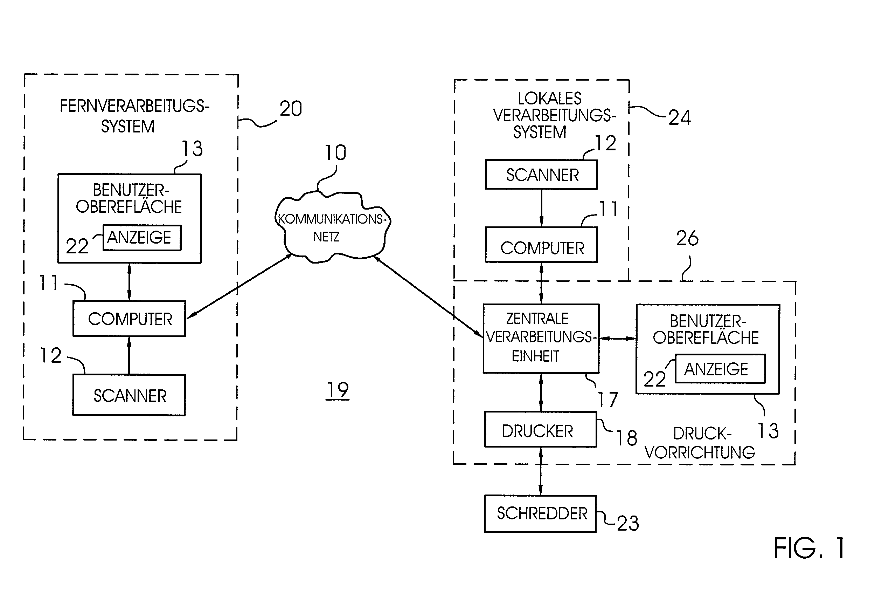

Fig. 1 zeigt ein Blockdiagramm eines erfindungsgemäßen Dokumentenherstellungssystems 19. Das Dokumentenherstellungssystem 19 enthält ein Fernverarbeitungssystem 20, ein Kommunikationsnetzwerk 10, ein lokales Verarbeitungssystem 24 und ein Drucksystem 26. Das Fernverarbeitungssystem 20 kann über das Kommunikationsnetzwerk 10 mit dem Drucksystem 26 kommunizieren. Das lokale Verarbeitungssystem 24 kann direkt mit dem Drucksystem 26 kommunizieren.

Das Dokumentenherstellungssystem 19 erleichtert die Umwandlung physikalischer Darstellungen (z.B. der gedruckten Seite) eines Eingabebilds in eine elektronische Darstellung an dem lokalen Verarbeitungssystem 24 oder dem Fernverarbeitungssystem 20. Das Dokumentherstellungssystem 19 erleichtert die Übertragung einer elektronischen Darstellung eines oder mehrerer Eingabebilder von dem Fernverarbeitungssystem 20 an das Drucksystem 26 über das Kommunikationsnetzwerk 16. Das Drucksystem 26 verarbeitet die elektronische Darstellung in einer Weise, die das seitenweise Leiten der Ausgabeseiten an eine oder mehrere Ausgabefächer des Druckers 18 unterstützt.

Das Fernverarbeitungssystem umfasst eine mit einem Computer 11 verbundene Benutzerschnittstelle 13. Der Computer 11 ist wiederum mit einem Scanner 12 verbunden. Gemäß einer Ausführungsform ist die Benutzerschnittstelle 13 als eine grafische Benutzerschnittstelle mit einer Tastatur, einer Zeigevorrichtung (z.B. einer Maus), einer Anzeige 22 und den geeigneten Softwareanweisungen zur Unterstützung der Tastatur, der Zeigevorrichtung und der Anzeige 22 ausgebildet. Der Computer 11 kann einen oder mehrere Druckaufträge des Drucksystems 26 erzeugen oder empfangen. Der Computer 11 kann z.B. einen durch den Betrieb des Scanners 12 entstandenen Druckauftrag unterstützen. Der Computer 11 kann Druckaufträge mit elektronischen Darstellungen von Eingabebildern oder Dokumenten über das Kommunikationsnetzwerk 10 an das Drucksystem 26 übermitteln. Bei dem Kommunikationsnetzwerk 10 kann es sich um das Internet, ein Intranet, ein leitungsvermitteltes Übertragungsnetz (d.h. ein CS-Netz oder circuit-switched network), ein Datenpaketnetzwerk (data-packet network), ein Ethernetsystem oder ein beliebiges anderes geeignetes Kommunikationsnetzwerk handeln.

Das lokale Verarbeitungssystem 24 umfasst einen mit dem Computer 11 verbundenen Scanner 12. Der Computer 11 übernimmt die Kommunikation mit einer zentralen Verarbeitungseinheit (central processing unit, CPU) 17 des Drucksystems 26. Das lokale Verarbeitungssystem 24 kann einen oder mehrere Druckaufträge des Drucksystems 26 erzeugen oder empfangen.

Das Fernverarbeitungssystem 20 oder das lokale Verarbeitungssystem 24 kann eine elektronische Darstellung der Eingabeseiten zur Ausführung durch das Drucksystem 26 erzeugen. Der Scanner 12 unterstützt das Einlesen von Eingabebildern auf Seiten und die Erzeugung einer elektronischen Darstellung der Eingabebilder zu deren Druck durch das Drucksystem 26.

Das Drucksystem 26 umfasst eine CPU 17, die mit einer Benutzerschnittstelle 13 und einem Drucker 18 verbunden ist. Die Benutzerschnittstelle 13 umfasst eine Anzeige 22. Bei der CPU 17 kann es sich um einen Computer oder ein Datenverarbeitungssystem handeln, das Druckaufträge über das Kommunikationsnetzwerk 10 oder auf andere Weise erhält. Die Druckaufträge können z.B. von dem Fernverarbeitungssystem 20, dem lokalen Verarbeitungssystem 24 oder von beidem kommen.

Die CPU 17 steuert viele oder alle Aspekte des Druckvorgangs eines oder mehrerer Druckaufträge des Druckers 18. Die CPU 17 kann unter der Verwendung eines oder mehrere Datenprozessoren umgesetzt werden, die in einer herkömmlichen oder parallelen Computerarchitektur angeordnet sind, um den Druckvorgang zu steuern. Die CPU 17 kann ein Muster von Medienzuführvorgängen für jeden Ausgabesatz eines Druckauftrags bestimmen, um eine gewünschte Erscheinungseigenschaft der Bogen eines Ausgabesatzes zu erreichen. Die gewünschte Erscheinungseigenschaft kann das Skalieren eines Bildes, die Auflösung eines Bildes, den Kontrast eines Bildes, die Auswahl von Medien für verschiedene Bogen eines Ausgabesatzes, die Reihenfolge der Bogen in einem Ausgabesatz, das Heften von Bogen in einem Ausgabesatz, das Binden eines Ausgabesatzes, die Lochung von Medien des Ausgabesatzes oder sonstige die visuelle Erscheinung eines Druckauftrags verändernde Attribute betreffen.

Das Drucksystem 26 kann Datenbits an Speicherorten in jeweiligen Speichersystem zur Rekonfiguration oder sonstigen Änderung des Betriebs der CPU 17 sowie zur sonstigen Verarbeitung von Signalen speichern. Die Speicherorte, z.B. Random Access Memories (RAM), sind physikalische Orte, die den Datenbits entsprechend je nach verwendeter Speicherart bestimmte elektrische, magnetische oder optische Eigenschaften aufweisen. Das lokale Verarbeitungssystem 24 und das Fernverarbeitungssystem 20 umfassen außerdem jeweils eine (nicht gezeigte) zentrale Verarbeitungseinheit in ihrem Computer 11 sowie jeweils (nicht gezeigte) Speichersysteme.

Die Datenbits können auch auf einem computerlesbaren Medium, z.B. auf einer magnetischen Diskette, einer optischen Diskette oder einem beliebigen anderen von der CPU 17 des Drucksystems 26 oder den Computern 11 des lokalen Verarbeitungssystems und des Fernverarbeitungssystems lesbaren flüchtigen oder nicht-flüchtigen Massenspeichersystem gespeichert sein. Das computerlesbare Medium umfasst kooperierende oder verbundene computerlesbare Medien, die ausschließlich auf dem Drucksystem 26 existieren oder auf mehrere verbundene Verarbeitungssysteme wie z.B. das lokale Verarbeitungssystem 24 oder das Fernverarbeitungssystem 20 verteilt sind.

Die Benutzerschnittstelle 13 unterstützt die Bedienerauswahl von Eigenschaften des Drucksystems 26 oder von Präferenzen in der endgültigen Darstellung des durch das Drucksystem 26 hergestellten Ausgabesatzes oder Druckauftrags. Bei Eingang eines Druckauftrags an der CPU 17 verwendet ein Nutzer des Drucksystems 26 die Benutzerschnittstelle 13 zur Überprüfung des Status des Druckauftrags bzw. der Druckaufträge. Der Benutzer kann weiterhin die Benutzerschnittstelle 13 verwenden, um zu bestimmen, wie die Druckaufträge aufgebaut sind. Die Anzeige 22 der Benutzerschnittstelle 13 kann mehrere Bildschirme aufweisen, die unterschiedlichen Funktionen dienen, z.B. der Anzeige des Status des Druckauftrags und dem Strukturieren des Aufbaus des Druckauftrags. Ein Bildschirm stellt ein an der Anzeige 22 der Benutzerschnittstelle 13 angezeigtes Bild dar.

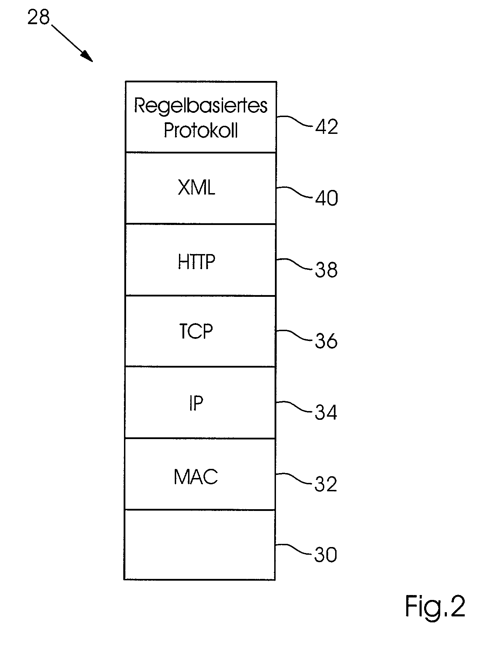

Ein zusätzlicher Bildschirm ermöglicht es dem Bediener, die Attribute der in die Eingabequellen geladenen Medien anzuzeigen, die in Fig. 2 gezeigt sind. Ein weiterer zusätzlicher Bildschirm dient der Anzeige von Papierstaubehebungsanweisungen, damit der Benutzer Anweisungen zur Papierstaubehebung oder eine sofortige Rückmeldung über am Drucker 18 vorgenommene Korrekturmaßnahmen erhält.

Bei einem Druckertreiber handelt es sich um Software, die von einem Betriebssystem in einen Speicher geladen wird, wenn ein Nutzer in einer Anwendung einen Druckbefehl erteilt. Z.B. kann ein Nutzer des Druckers 26 an der Benutzerschnittstelle 13 einen Druckbefehl erteilen. Das Betriebssystem der CPU 17 lädt die Druckertreibersoftware in den Speicher des Drucksystems 26 und erzeugt für den Nutzer eine Schnittstelle 13 zum Druckertreiber. Alternativ kann ein weiterer Nutzer am Fernverarbeitungssystem 20 an der Benutzerschnittstelle 13 des Fernverarbeitungssystems 20 einen Druckbefehl erteilen. In diesem Fall lädt das Betriebssystem des Computers 11 die Druckertreibersoftware in den Speicher des Fernverarbeitungssystems 20 und erzeugt für den Nutzer eine Schnittstelle 13 zum Druckertreiber.

Der Druckertreiber beginnt einen Kommunikationsaustausch mit dem Drucksystem 26, um dem Fernverarbeitungssystem 20 Informationen über das Drucksystem zu liefern. Dies kann Informationen über den Auftragsstatus, die mit dem Drucker 18 verbundenen und zur Verwendung zur Verfügung stehenden Weiterverarbeitungsstationen, eine Liste der dem Drucker 18 zur Verfügung stehenden oder gegenwärtig in den Papierfächern des Druckers 18 vorhandenen Medien oder aber Auftragskapazitätsinformationen über die Anzahl der gegenwärtig in der Warteschlange des Drucksystems 26 vorhandenen Druckaufträge umfassen.

Drucksysteme 26 und Fernverarbeitungssysteme 20 umfassen in zunehmendem Maße Internetschnittstellen und Schnittstellen zum World Wide Web (WWW), um über das Internet 10 mit anderen Netzwerkgeräten zu kommunizieren. Gemäß einer bevorzugten Ausführungsform der vorliegenden Erfindung umfassen das Drucksystem 26 und das Fernverarbeitungssystem 20 WWW-Schnittstellen zur Kommunikation über das Internet 10.

Fig. 2 zeigt ein Blockdiagramm eines bevorzugten Protocol Stacks 28 des Drucksystems 26 und des Fernverarbeitungssystems 20. Bekanntermaßen kann zur Beschreibung von Computernetzwerken das Open-System-Interconnection-Modell (OSI) herangezogen werden. Das OSI-Modell besteht aus sieben Schichten, die von unten nach oben eine physikalische Schicht (physical layer) 30, eine Datensicherungsschicht (data link layer) 32, eine Netzwerkschicht (network layer) 34, eine Transportschicht (transport layer) 36, eine Sitzungsschicht (session layer) 38, eine Darstellungsschicht (presentation layer) 40 und eine Anwendungsschicht (application layer) 42 umfassen.

Die physikalische Schicht 30 übermittelt Daten zwischen Netzwerkgeräten als Bits über eine Kommunikationsverbindung oder ein Übertragungsmedium. Die physikalische Schicht 30 steuert die elektrischen und mechanischen Verbindungen des Netzwerkgeräts mit dem physikalischen Übertragungsmedium, z.B. einem Ethernet.

Über der physikalischen Schicht 30 befindet sich die Datensicherungsschicht (data link layer) 32. Wie in Fig. 2 gezeigt ist, wird als Protokoll für die Datensicherungsschicht 32 ein Medium-Access-Control-Protokoll (MAC-Protokoll) bevorzugt. Das MAC-Protokoll steuert bekanntermaßen den Zugang zu einem Übertragungsmedium über die physikalische Schicht 30. MAC-Adressen sind in der Regel 48-Bit-Adressen, die für jede MAC-Schnittstelle für Netzwerkgeräte eindeutig sind. Die MAC-Schnittstelle des Drucksystems 26 z.B. verfügt über eine eindeutige 48-Bit-Adresse.

Über der Datensicherungsschicht 32 befindet sich eine Netzwerkschicht (network layer) 34. Als Protokoll für die Netzwerkschicht 34 wird das Internet-Protokoll (IP) bevorzugt. Das IP entspricht grob der Schicht 3 des OSI-Modells, d.h. der Netzwerkschicht, ist jedoch üblicherweise nicht als Teil des OSI-Modells definiert. Bekanntermaßen handelt es sich bei IP um ein Routing-Protokoll, das dazu dient, den Verkehr innerhalb eines Netzwerks oder zwischen Netzwerken zu routen. Zusätzliche Informationen über das IP finden sich im Request for Comments (RFC) Nr. 791 der Internet Engineering Task Force (IETF) mit dem Titel "Internet Protocol" vom September 1981.

Über der Netzwerkschicht 34 befindet sich die Transportschicht (transport layer) 36. Als Protokoll für die Transportschicht 36 wird ein Transmission-Control-Protokoll (TCP) bevorzugt. Das TCP entspricht grob der Schicht 4 des OSI-Modells, d.h. der Transportschicht 36, ist jedoch üblicherweise nicht als Teil des OSI-Modells definiert. Bekanntermaßen stellt das TCP einen verbindungsorientierten Modus der Kommunikation mit Datagrammen bereit. Weitere Informationen über das TCP finden sich im RFC Nr. 793 der IETF mit dem Titel "Transmission Control Protocol" vom September 1981.

Über der Transportschicht 36 befindet sich die Sitzungsschicht (session layer) 38. Als Protokoll für die Sitzungsschicht 38 wird das Hypertext-Transfer-Protokoll (http) bevorzugt. Bei http handelt es sich um ein Protokoll zum Austausch von Dateien im World Wide Web. Weitere Informationen über http finden sich im RFC Nr. 2068 der IETF mit dem Titel "Hypertext Transfer Protocol" vom Januar 1997.

Über der Sitzungsschicht 38 befindet sich die Darstellungsschicht (presentation layer) 40. Als Protokoll für die Darstellungsschicht 40 wird die eXtensible Markup Language (XML) bevorzugt. Bei XML handelt es sich um eine Metasprache für Dokumente zur Definition strukturierter Informationen. Weitere Informationen über XML finden sich in der W3C-Empfehlung mit dem Titel "Extensible Markup Language (XML) 1.0 (Second Edition)" vom Oktober 2000, zu finden unter URL: http://www.w3.org/TR/REC-xml.

Über der Darstellungsschicht 40 befindet sich die Anwendungsschicht 42. Als Protokoll für die Anwendungsschicht 42 wird ein regelbasiertes Protokoll wie z.B. das Simple-Object-Access-Protokoll (SOAP) bevorzugt. Regelbasierte Protokolle, z.B. SOAP, ermöglichen es den an einem Netzwerkgerät, z.B. dem Fernverarbeitungssystem 20, installierten Anwendungen mit einer auf einem anderen Netzwerkgerät, z.B. dem Drucksystem 26, installierten Anwendung zu kommunizieren. SOAP verwendet http und XML zum Austausch von Informationen zwischen auf verschiedenen Netzwerkgeräten installierten Anwendungen über das Kommunikationsnetzwerk 10. Die beiden Netzwerkgeräte können unterschiedliche Betriebssysteme aufweisen und ihre jeweilige Anwendung gemäß dem jeweiligen Betriebssystem betreiben. Weitere Informationen zu SOAP finden sich in der W3C-Notiz "Simple Object Access Protocol (SOAP 1.1)" vom Mai 2000, zu finden unter der URL: http//www.w3.org/TR/SOAP.

Ein regelbasiertes Protokoll ist flexibler als IPP in der Kommunikation zwischen dem Fernverarbeitungssystem 20 und dem Drucksystem 26, da die Informationen über IPP austauschbaren Informationen auf einen statischen Satz von Vorgängen und Attributen beschränkt ist. Der vordefinierte IPP-Vorgang "status code" kann z.B. innerhalb einer HTTP-Nachricht als Nachricht von dem Fernverarbeitungssytsem 20 an das Drucksystem 26 geleitet werden. Das Drucksystem 26 erhält die Nachricht, entkapselt sie und verarbeitet die Nachricht in der CPU 17. Die CPU 17 ermittelt den Status des Druckers 18, d.h. welches der drei Attribute bereit, in Betrieb, Papierstau zutrifft. Die Druckvorrichtung 26 antwortet dem Fernverarbeitungssystem 20 mit einer Nachricht, die den Status in Form eines Attributs in einer IPP-Nachricht zurück sendet. Die Kommunikation mittels IPP ist jedoch begrenzt auf ausschließlich die Vorgänge und Attribute, die IPP unterstützt.

Regelbasierte Protokolle wie SOAP ermöglichen anstelle von vordefinierten Vorgängen und Attributen benutzerdefinierte Vorgänge und Attribute. Auf diese Weise kann der Benutzer Übertragungsinformationen über wesentlich mehr Eigenschaften des Druckers 26 definieren. Dies ist von großer Bedeutung, da moderne digitale Drucksysteme 26 immer komplexer und flexibler werden. Ein flexibler Satz von Vorgängen und Attributen kann zu einer erhöhten Effizienz und einem verbesserten Fernbetrieb des Drucksystems 26 beitragen.

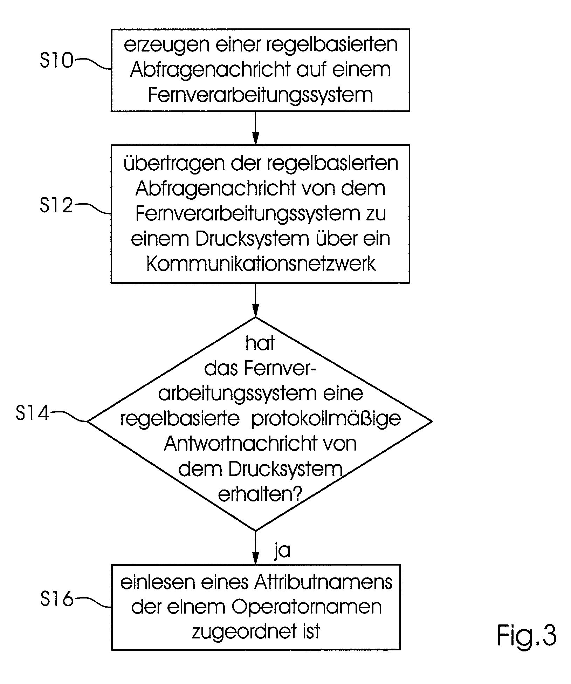

Fig. 3 zeigt ein Ablaufdiagramm eines bevorzugten Verfahrens zur Kommunikation mit einem Drucksystem 26 über ein Kommunikationsnetzwerk 10 mittels eines erfindungsgemäßen regelbasierten Protokolls. In einem Schritt S10 erzeugt das Fernverarbeitungssystem 20 eine Abfragenachricht gemäß einem regelbasierten Protokoll. Diese im Folgenden auch als protokollgemäße Abfragenachricht bezeichnete Abfragenachricht gemäß dem regelbasierten Protokoll enthält einen Operatornamen.

In einem Schritt S12 überträgt das Fernverarbeitungssystem 20 die Abfragenachricht von dem Fernverarbeitungssystem 20 über das Kommunikationsnetzwerk 10 an das Drucksystem 26.

In einem Schritt S14 ermittelt das Fernverarbeitungssystem 20, ob es vom Drucksystem 26 eine im folgenden auch als protokollgemäße Antwortnachricht bezeichnete Antwortnachricht gemäß dem regelbasierten Protokoll erhält.

Wenn das Fernverarbeitungssystem 20 die protokollgemäße Antwort erhält, liest es in einem Schritt S16 einen dem Operatornamen zugeordneten und in der protokollgemäßen Antwortnachricht enthaltenen Attributsnamen.

Bekanntermaßen ist im SOAP-Protokoll jeder Block innerhalb eines <SOAP-ENV:Body> und </SOAP-ENV:Body> ein Funktionsaufruf mit einem Operatornamen. Eine SOAP Abfragenachricht in Form des Ausdrucks 1 enthält einen Operatornamen für die Funktion, die das Drucksystem 26 fragt, welches Papier sein Papierkatalog enthält.

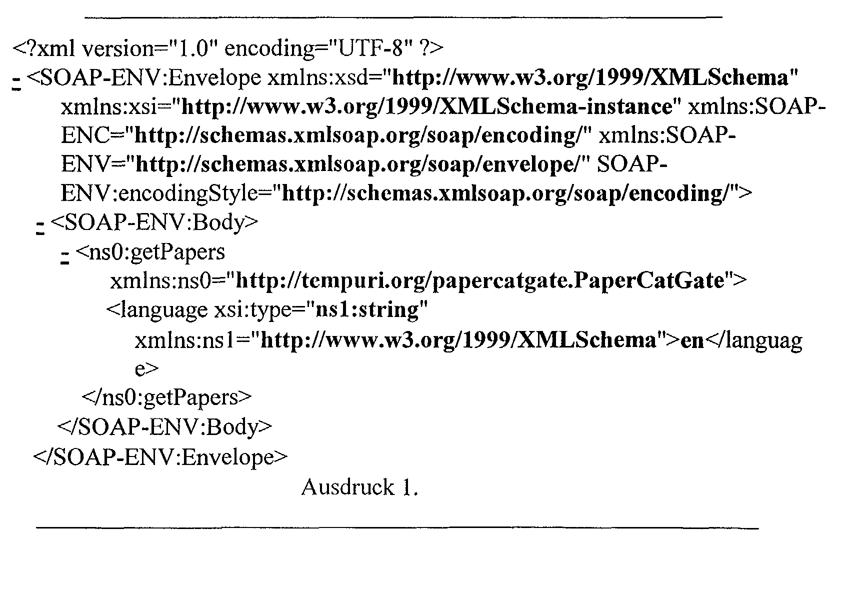

Das Drucksystem 26 empfängt die SOAP-Nachricht und erzeugt in Reaktion auf die Abfrage der Medien in seinem Papierkatalog eine SOAP-Antwortnachricht, in der die Attribute der Medien in seinem Papierkatalog zurückgesandt werden. Jedes Medium hat fünf Attribute: Name, Farbe, Art, Gewicht und Format. Die Form der SOAP-Antwortnachricht ist in Ausdruck 2 dargestellt. 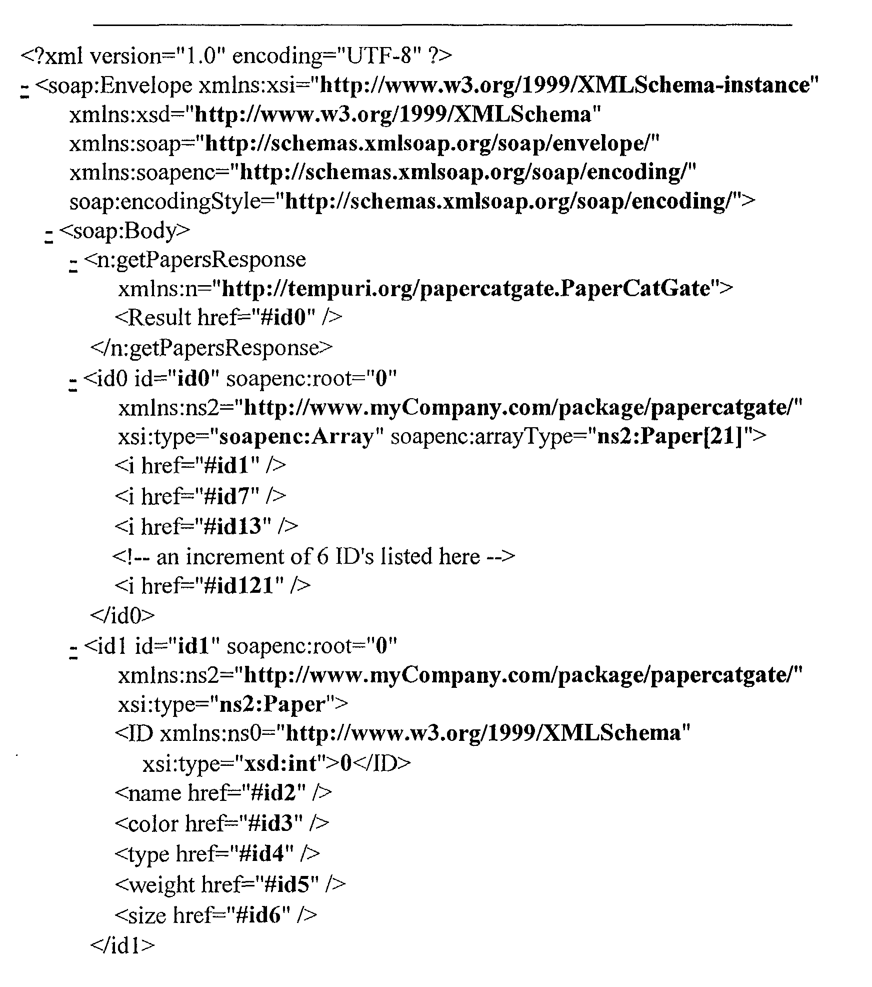 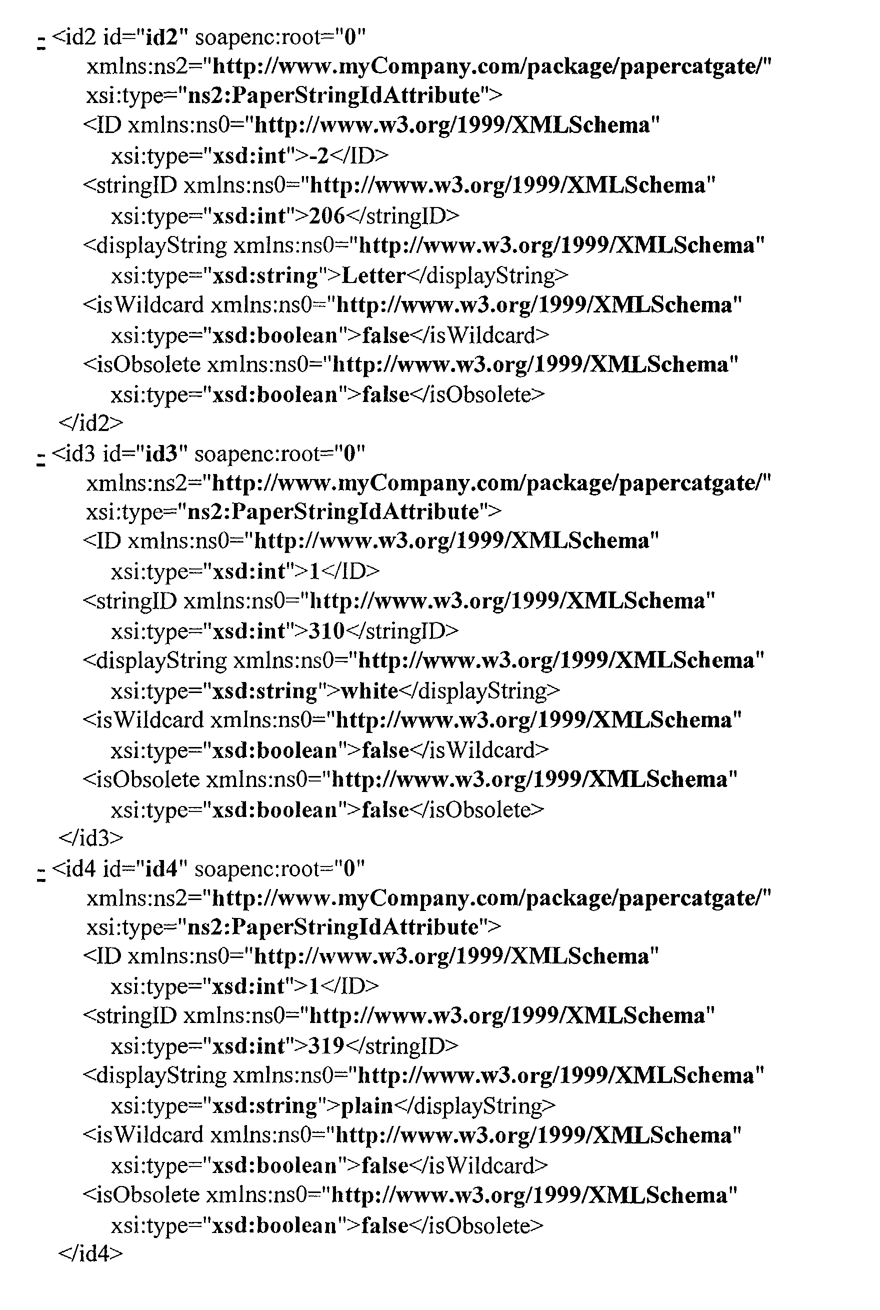 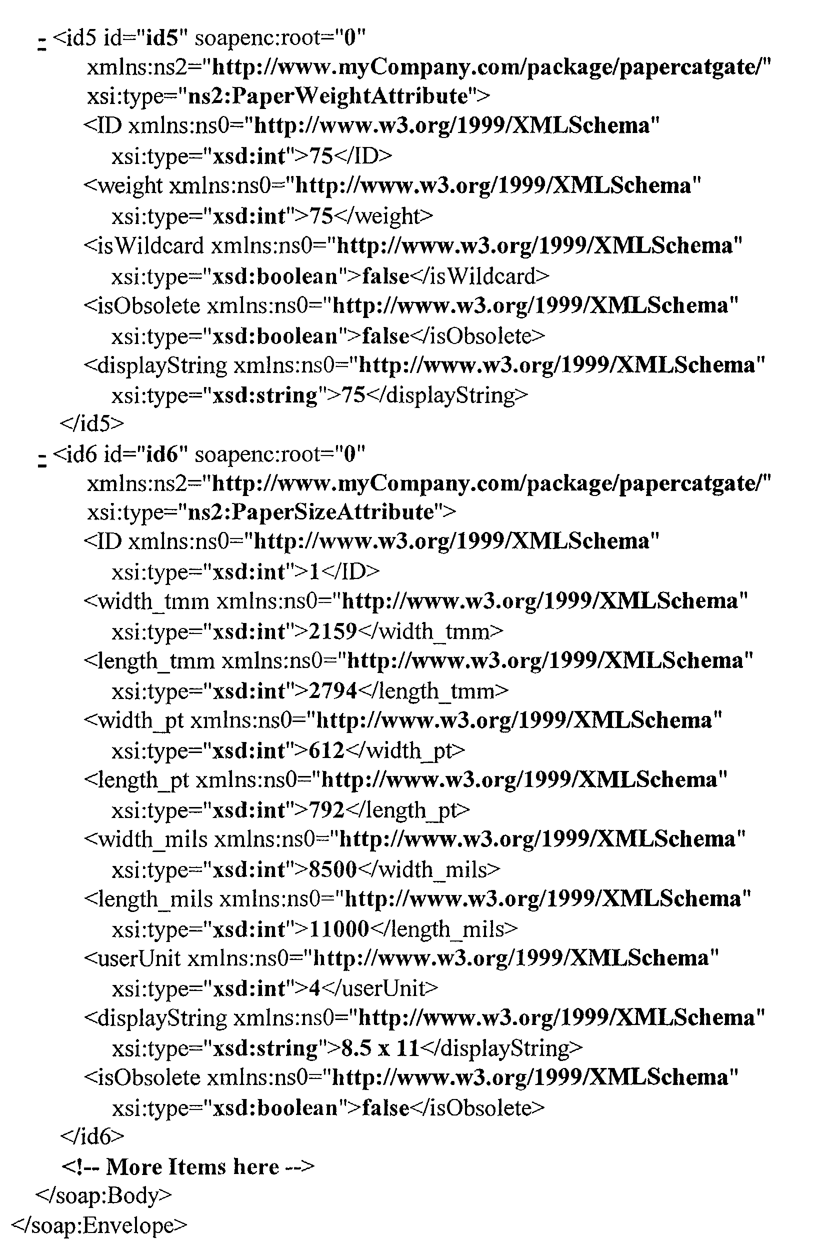 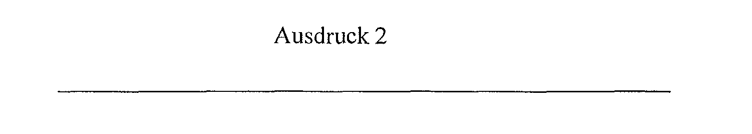 Jedem der fünf Attribute ist eine Identifikationsnummer zugeordnet. Für jedes Attribut sieht die SOAP-Nachricht fünf Felder vor, die den Wert des Attributs an das Fernverarbeitungssystem 20 zurück senden. Die fünf Felder umfassen jeweils ein Feld "ID", ein Feld "StringID", ein Feld "DisplayString", ein Feld "isWildCard" und ein Feld "isObsolete". Auf diese Weise kann das Drucksystem 26 die Attribute an das Fernverarbeitungssystem 20 zurück senden, damit die Attribute vom Druckertreiber oder einer anderen mittels eines regelbasierten Protokolls mit dem Drucksystem 26 kommunizierenden Anwendung angezeigt wird.

Die vorliegende ausführliche Beschreibung dient nur der Veranschaulichung einiger Ausführungsformen der Erfindung. Die Schritte der Ablaufdiagramme können in einer anderen Reihenfolge als der beschriebenen ausgeführt werden, und in den Blockdiagrammen können mehr oder weniger Elemente oder Komponenten verwendet werden.

### Liste der Bezugszeichen

- 10: Kommunikationsnetzwerk
- 11: Computer
- 12: Scanner
- 13: Benutzerschnittstelle
- 17: zentrale Verarbeitungseinheit
- 18: Drucker
- 19: Dokumentherstellungssystem
- 20: Fernverarbeitungssystem
- 22: Anzeige
- 24: lokales Verarbeitungssystem
- 26: Drucksystem
- 28: Protocol Stack
- 30: physikalische Schicht
- 32: Datensicherungsschicht
- 34: Netzwerkschicht
- 36: Transportschicht
- 38: Sitzungsschicht
- 40: Darstellungsschicht
- 42: Anwendungsschicht
- S10: Verfahrensschritt
- S12: Verfahrensschritt
- S14: Verfahrensschritt
- S16: Verfahrensschritt

## Patentansprüche

1. Verfahren zur Kommunikation mit einem Drucksystem (26) über ein Kommunikationsnetzwerk (10) mittels eines regelbasierten Protokolls mit mindestens den folgenden Schritten:
Erzeugen einer Abfragenachricht gemäß dem regelbasierten Protokoll an einem Fernverarbeitungssystem (20), wobei diese protokollgemäße Abfragenachricht einen Operatornamen umfasst;
Übertragen der protokollgemäßen Abfragenachricht vom Fernverarbeitungssystem (20) an das Drucksystem (27) über das Kommunikationsnetzwerk (10);
Ermitteln, ob das Fernverarbeitungssystem von dem Drucksystem (26) eine Antwortnachricht gemäß dem regelbasierten Protokoll erhält; und
Lesen eines dem Operatornamen zugeordneten, in der protokollgemäßen Antwortnachricht enthaltenen Attributnamens bei Erhalt einer protokollgemäßen Antwortnachricht des Drucksystems (26) durch das Fernverarbeitungssystem.

2. Computerlesbares Medium, auf dem Anweisungen gespeichert sind, welche eine Ausführung des Verfahrens gemäß Anspruch 1 durch eine zentrale Verarbeitungseinheit (CPU) (17) bewirken.

3. Verfahren nach Anspruch 1,
**dadurch gekennzeichnet,**
**dass** die Schritte des Erzeugens und des Lesens durch einen auf dem Fernverarbeitungssystem (20) installierten Druckertreiber erfolgen.

4. Verfahren nach einem der Ansprüche 1 oder 3,
**dadurch gekennzeichnet,**
**dass** die protokollgemäße Abfragenachricht eine Abfragenachricht gemäß dem Simple Object Access Protocol ist.

5. Verfahren nach einem der Ansprüche 1 oder 3 bis 4,
**dadurch gekennzeichnet,**
**dass** die protokollgemäße Antwortnachricht eine Antwortnachricht gemäß dem Simple Object Access Protocol ist.
